# EUROPÄISCHE PATENTSCHRIFT

(11) **EP 1 142 199 B1**
(45) Veröffentlichungstag und Bekanntmachung des Hinweises auf die Patenterteilung: **02.08.2006**
(21) Anmeldenummer: 00964239.8
(22) Anmeldetag: 27.09.2000
(51) Int. Cl.: H04L 12/24, H04Q 3/00

(54) **EINRICHTUNG ZUR STEUERUNG EINES TELEKOMMUNIKATIONSSYSTEMS**
DEVICE FOR CONTROLLING A TELECOMMUNICATIONS SYSTEM
DISPOSITIF DE COMMANDE D'UN SYSTEME DE TELECOMMUNICATION

(30) Priorität: 14.10.1999 DE 19949531
(43) Veröffentlichungstag der Anmeldung: 10.10.2001
(73) Patentinhaber: Deutsche Telekom AG, 53113 Bonn (DE)
(72) Erfinder: RIES, Wolfgang, 53340 Meckenheim (DE); GROHS, Martina, 64367 Mühltal (DE); SPIRA, Hans, 55413 Weiler (DE)
(86) Internationale Anmeldenummer: PCT/EP2000/009427
(87) Internationale Veröffentlichungsnummer: WO 2001/028158

(56) Entgegenhaltungen:
- WO-A-98/59462
- US-A- 5 768 501
- US-A- 5 784 359
- SETHI A S ET AL: "A HIERARCHICAL MANAGEMENT FRAMEWORK FOR BATTLEFIELD NETWORK MANAGEMENT" NOV. 3 - 5, 1997,NEW YORK, NY: IEEE,US, 3. November 1997 (1997-11-03), Seiten 1239-1243, XP000792606 ISBN: 0-7803-4250-X

## Beschreibung

Die Erfindung betrifft eine Einrichtung zur Steuerung eines aus mehreren Netzen bestehenden Telekommunikationssystems, wobei die Netze für Dienste oder Teile von Diensten ausgebildet sind, wobei jeweils einem Netz eine Netz-Management-Einrichtung zugeordnet ist und wobei die Netz-Management-Einrichtungen von Service-Management-Einrichtungen steuerbar sind.

Telekommunikationssysteme im weiteren Sinn bestehen aus einer Mehrzahl von Netzen, von denen entsprechend dem jeweiligen Bedarf mehrere zur Schaffung einer Ende-zu-Ende-Verbindung zusammengeschaltet werden. Zur Steuerung und Überwachung solcher Systeme ist eine funktionelle Management-Architektur erforderlich, die beispielsweise in ITU-T-Empfehlungen, insbesondere M.3010, beschrieben ist - siehe auch WO-A-98 59462. Eine solche Management-Architektur ist in Fig. 2 schematisch dargestellt.

Die niedrigste Ebene enthält Netzelemente NE, die von jeweils einer Element-Management-Einrichtung EMS verwaltet werden. Darüber befindet sich eine Ebene aus Netz-Management-Einrichtungen NMS, an die sich Service-Management-Einrichtungen SMS nach oben anschließen. Die Funktionen der Service-Management-Einrichtung SMS können teilweise von Kunden selbst übernommen werden. Diese Funktion wird Customer-Network-Management CNM genannt. Zur geschäftsmäßigen Verwaltung des gesamten Kommunkationssystems dient dann die Business-Management-Einrichtung BMS.

Grob zusammengefaßt sind die Network-Management-Einrichtungen für die Überwachung und Steuerung der in einem geographischen Bereich angeordneten Netzelemente zuständig, während im Fokus der Service-Management-Einrichtungen die vertraglichen Aspekte der den Kunden bereitgestellten Dienstleistungen stehen (hierzu zählen u.a. Service-Beauftragung, Service-Reklamationen und Abrechnung). In diesem Zusammenhang wurden die Begriffe "NMF = Network Management Function" und "SMF = Service Managment Function" für die den entsprechenden Management-Ebenen zugeordneten Funktionalitäten eingeführt.

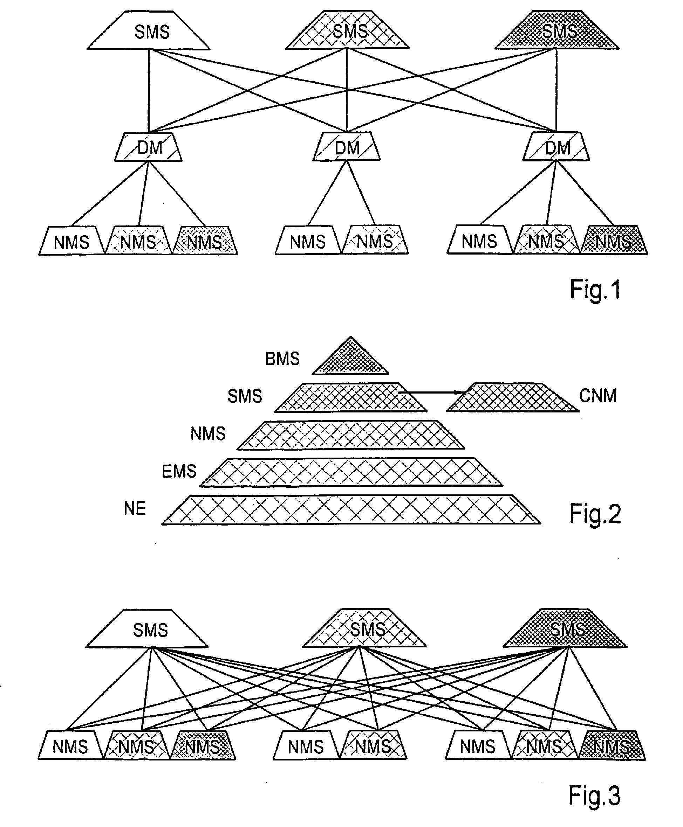

Eine wesentliche Leistung des Kommunikationssystems ist das zur Verfügungstellen von sogenannten Ende-zu-Ende-Verbindungen, wobei je nach Art der Verbindung mehrere Netze benötigt werden. Um diese Dienstleistung möglichst vielfältig erbringen zu können, ist daher der Zugriff der Service-Management-Einrichtungen auf viele Netz-Management-Einrichtungen NMS erforderlich. Deshalb ergibt sich bei den bekannten Systemen eine sogenannte Many-to-many-Relation, wie sie in Fig. 3 dargestellt ist. Dabei wird die Anzahl der erforderlichen Schnittstellen zwischen den Netz-Management-Einrichtungen NMS und den Service-Management-Einrichtungen SMS sehr schnell unüberschaubar und ist praktisch nicht mehr verwaltbar.

Aufgabe der vorliegenden Erfindung ist es, eine Einrichtung zur Steuerung eines aus mehreren Netzen bestehenden Telekommunikationssystems anzugeben, welche ohne die genannten Nachteile den Service-Management-Einrichtungen Zugriff auf die für die jeweiligen Dienste erforderlichen Netz-Management-Einrichtungen ermöglicht.

Diese Aufgabe wird erfindungsgemäß dadurch gelöst, daß für Zugriffe der Service-Management-Einrichtungen auf Netz-Management-Einrichtungen Bereichs-Management-Einrichtungen vorgesehen sind, die ihrerseits Zugriff auf ausgewählte Netz-Management-Einrichtungen haben und mit jeweils einer Service-Management-Einrichtung verbindbar sind.

Bei der erfindungsgemäßen Einrichtung ist die Zahl der an den Service-Management-Einrichtungen und den Netz-Management-Einrichtungen erforderlichen Schnittstellen wesentlich geringer als bei den bekannten Einrichtungen.

Eine vorteilhafte Ausgestaltung der erfindungsgemäßen Einrichtung besteht darin, daß zur Verbindung der Service-Management-Einrichtungen mit den Bereichs-Management-Einrichtungen eine steuerbare Matrix vorgesehen ist. Dabei ist vorzugsweise vorgesehen, daß die steuerbare Matrix entsprechend jeweils zu verwaltender Ende-zu-Ende-Verbindungen gesteuert wird.

Eine Weiterbildung der erfindungsgemäßen Einrichtung besteht darin, daß über die Matrix ferner mindestens eine Customer-Network-Management-Einrichtung anschaltbar ist. Hierdurch wird ohne weiteren zusätzlichen Aufwand an Schalteinrichtungen eine dynamische Zuordnung zwischen den jeweiligen Netz-Management-Einrichtungen und den Customer-Network-Management-Einrichtungen ermöglicht.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines Ausführungsbeispiels,
- Fig. 2: eine schematische Darstellung des bekannten Multilayer-Konzepts gemäß ITU-T-Empfehlung,
- Fig. 3: eine schematische Darstellung der Many-to-many-Relationen zwischen Service-Management-Einrichtungen und Netz-Management-Einrichtungen,
- Fig. 4: ein Blockschaltbild eines weiteren Ausführungsbeispiels,
- Fig. 5: ein Blockschaltbild einer in der Einrichtung nach

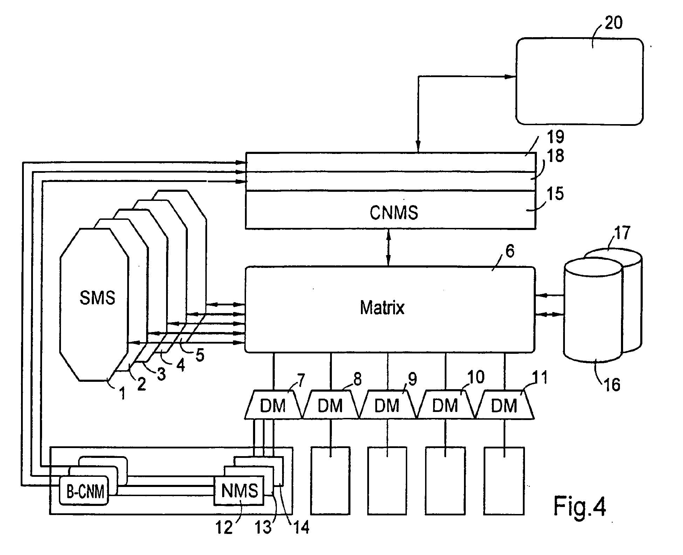

- Fig. 4: verwendeten Bereichs-Management-Einrichtung,

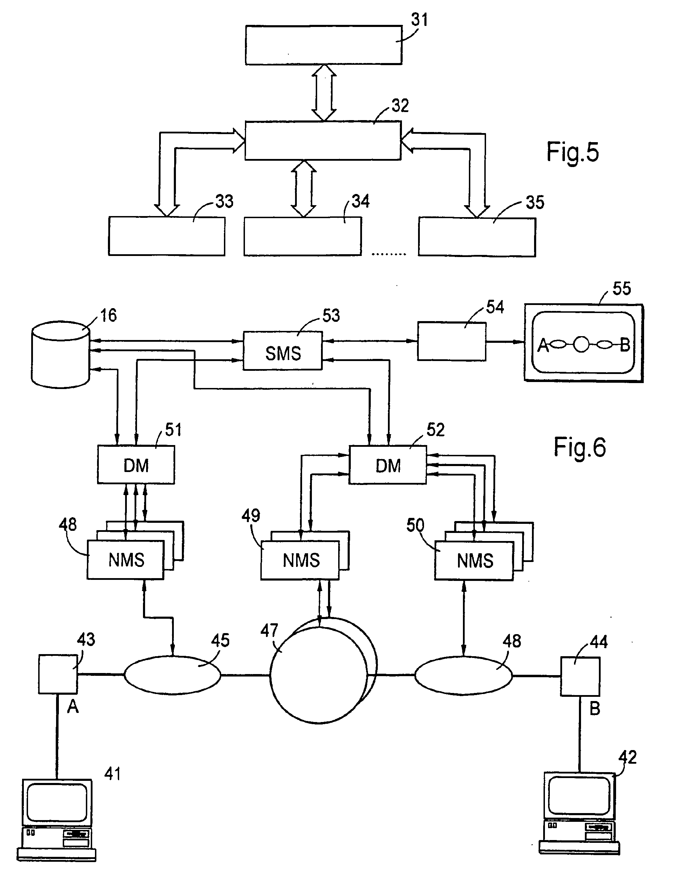

- Fig. 6: ein Beispiel für eine Ende-zu-Ende-Verbindung durch mehrere Netze, die mit einer erfindungsgemäßen Einrichtung verwaltet werden, und

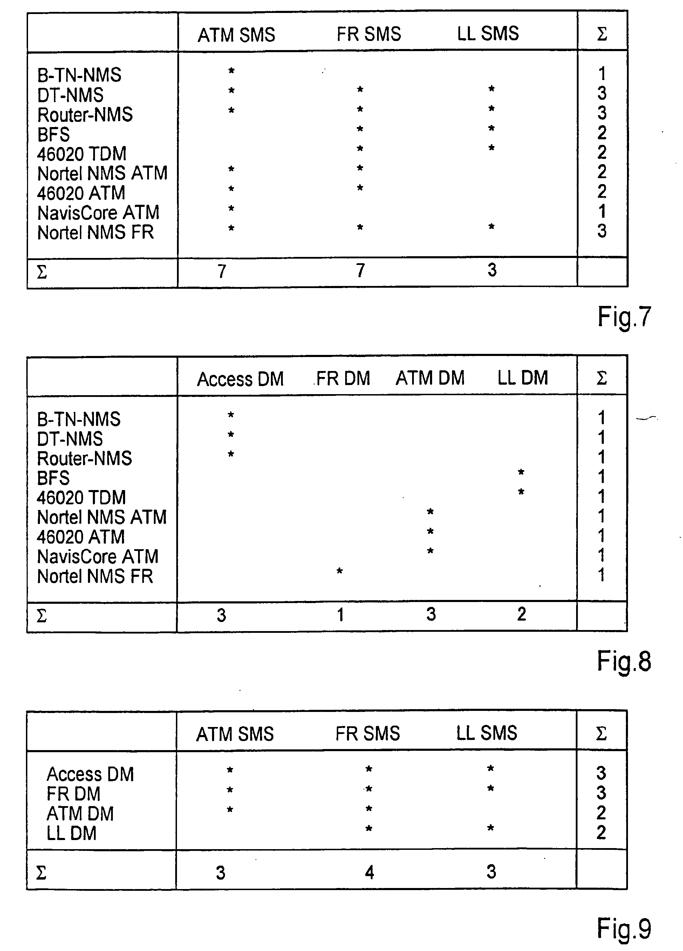

- Fig. 7: bis Fig. 9 Tabellen zur Erläuterung der durch die Erfindung bewirkten Verbesserungen.

Fig. 1 zeigt drei Service-Management-Einrichtungen SMS, von denen jede mit drei Domain-Managern DM verbunden sind, an die wiederum drei bzw. zwei Netz-Management-Einrichtungen angeschlossen sind. Ein Vergleich mit Fig. 3 zeigt, daß wesentlich weniger Schnittstellen benötigt werden als bei der bekannten Einrichtung.

Bei dem Ausführungsbeispiel gemäß Fig. 4 sind fünf Service-Management-Einrichtungen 1 bis 5 über eine Matrix 6, im folgenden auch Korrelationsmatrix genannt, mit fünf Domain-Managern 7 bis 11 verbindbar. Die Domain-Manager 7 bis 11 haben Zugriff auf Netz-Management-Einrichtungen, von denen in Fig. 4 lediglich drei Netz-Management-Einrichtungen 12, 13, 14 beispielhaft dargestellt sind.

An die Korrelationsmatrix 6 ist ferner ein Server 15 für das Customer-Network-Management angeschlossen. Außerdem steht die Korrelationsmatrix 6 mit zwei Datenbanken 16, 17 in , Verbindung, wobei eine als Datenbank KD DB (Kunden-Datenbank) und die andere als Datenbank SLA (= service level agreement) dient. Der Server 15 kann über zwei Schichten 18, 19 mit Kunden-Einrichtungen 20 Daten austauschen, wobei die Schicht 18 im Sinne einer Corporate Identity eine geeignete den Netzbetreiber kennzeichnende Bedienoberfläche zur Verfügung stellt, während die Schicht 19 als Security Layer ausgebildet ist. Den Netz-Management-Einrichtungen 12, 13, 14 sind ferner jeweils Einrichtungen B-CNM (= basic customer network management) zugeordnet, deren Daten dem Server 15 zugeleitet werden.

Zur weiteren Erläuterung des Ausführungsbeispiels gemäß Fig. 4 wird zunächst auf die Figuren 4 und 5 Bezug genommen. Fig. 5 zeigt die Funktionsblöcke eines Domain-Managers 7 bis 11 (Fig. 4). Dabei dient ein Management-Informationsverteiler 31 zur Verbindung mit der Korrelationsmatrix 6 (Fig. 4). Eine weitere Datenverarbeitungseinrichtung 32 dient zur Datenaufbereitung, zur Vorkorrelation und zur Umsetzung von NMF auf SMF. Subsystemadapter 33, 34, 35, von denen in Fig. 5 beispielhaft lediglich drei dargestellt sind, dienen zur Verbindung mit den jeweiligen Netz-Management-Einrichtungen.

Parallel zu den Service-Management-Einrichtungen 1 bis 5 werden die service-orientierten Informationen an den Customer-Network-Management-Server 15 geliefert. Hierdurch wird eine einheitliche umfassende Zugriffsmethode auf die CNM-Information gewährleistet. Die Realisierung der Verknüpfung von Kundendatenbanken, Domain-, Service- und Customer-Network-Management-Einrichtungen mit Hilfe der Korrelationsmatrix 6 erfolgt über eine objektbasierende Kommunikationsinfrastruktur, die eine Ende-zu-Ende-Dienst-Korrelation unterstützt und eine flexible Modellierung komplexer Dienste durch Kombination der von den Domain-Managern übermittelten Informationen ermöglicht.

Diese Kommunikationsinfrastruktur ermöglicht es, daß die servicerelevanten Verbindungsobjekte unterschiedlicher Domain-Manager von der zuständigen Service-Management-Einrichtung SMS abgefragt und Status-Änderungen von den Domain-Managern dediziert an die Service-Management-Einrichtung SMS weitergeleitet werden können. Im weiteren liefert sie die Basis für die Übermittlung kundenseitiger Anfragen vom Customer-Network-Management-System zur Service-Management-Einrichtung SMS und umgekehrt zur Bereitstellung von kundenrelevanten Informationen von der Service-Management-Einrichtung SMS über das Customer-Network-Management-System. Auch die Basisinformationen für die Korrelation werden über diese Kommunikationsinfrastruktur den Domain-Managern, den Service-Management-Einrichtungen SMS und den Customer-Network-Management-Systemen zugeleitet.

Die Funktionalität der Domain-Manager besteht in der Adaption der Subsysteme, der Umsetzung der von den Subsystemen empfangenen Netz-Management-Informationen aus den Bereichen Fault-, Performance- und Configuration-Management in serviceorientierte Informationen sowie in der Umsetzung der von den Service-Management-Einrichtungen empfangenen Anforderungen in Netz-Management-Request und deren Weiterleitung an die zuständigen Netz-Management-Einrichtungen. Die Schnittstelle in Richtung Service-Management-Einrichtungen ist als normierte objektorientierte Schnittstelle ausgeführt und ist in der Kommunikationsinfrastruktur integriert. Der Domain-Manager garantiert überdies für den bidirektionalen Informationsaustausch, daß die im Sicherheitskonzept enthaltenen Anforderungen bezüglich der Zugriffsbeschränkungen auf die Netz-Management-Einrichtungen und bezüglich der Integrität und der Vertrauchlichkeit der Daten eingehalten werden (Security-Management-Funktionen).

Fig. 6 zeigt die für eine Frame-Relay-Ende-zu-Ende-Verbindung verwendeten Netze und Management-Einrichtungen. Die Verbindung erfolgt zwischen zwei Endeinrichtungen 41, 42, die als Computer dargestellt sind, über jweils einen Kunden-Service-Switch 43, 44, über Access-Networks 45, 46 und ein ATM-Netz 47 als Backbone-Netz. Zur Verwaltung dieser Netze ist jeweils eine Netz-Management-Einrichtung 48, 49, 50 vorgesehen, die jeweils zusammen mit weiteren Netz-Management-Einrichtungen einem Domain-Manager 51, 52 zugeordnet sind. Auf die Domain-Manager 51, 52 hat über eine in Fig. 6 nicht dargestellte Korrelationsmatrix eine Service-Management-Einrichtung 53 Zugriff. Die Kunden-Datenbank 16 ist zum Austausch von Daten mit den Domain-Managern und der Service-Management-Einrichtung 53 verbunden. Außerdem ist die Customer-Network-Management-Einrichtung 54 an die Service-Management-Einrichtung angeschlossen. Auf einem Bildschirm 55 der Customer-Network-Management-Einrichtung 54 wird die Ende-zu-Ende-Verbindung vom Punkt A bis Punkt B abgebildet, so daß ein Bediener sich jeweils ein Bild über den Zustand der Verbindung machen und bei Fehlern eingreifen kann.

Die Vorteile der erfindungsgemäßen Einrichtung werden im folgenden anhand eines Anwendungsbeispiels beschrieben, bei dem Service- und Customer-Network-Management für Dienste bereitgestellt werden, welche auf ATM, auf Frame-Relay und Leased-Link basieren. Dazu sind Netz-Management-Informationen von folgenden Netzen zu integrieren:
- 3 NMS für Access-Komponenten (B-NT-NMS, DTNMS und Router-NMS),
- 2 NMS für Leased-Link (BFS, 46020),
- 3 NMS für ATM (Nortel NMS, 46020, NavisCore),
- 1 NMS für Frame-Relay (Nortel NMS).

Die Relevanz der Management-Information aus Management-Sicht kann Fig. 7 entnommen werden.

Daraus ist ersichtlich, daß je Netz-Management-Einrichtung in Richtung auf die Service-Management-Einrichtungen im Mittel zwei Schnittstellen und je Service-Management-Einrichtung in Richtung auf die Netz-Management-Einrichtungen fünf bis sieben Schnittstellen erforderlich sind.

Fig. 8 zeigt die an den Domain-Managern in Richtung auf die einzelnen Netze erforderlichen Schnittstellen und umgekehrt, während Fig. 9 die zwischen den Domain-Managern und den Service-Management-Einrichtungen erforderlichen Schnittstellen aufweist. Es ist erkennbar, daß je Netz-Management-Einrichtung unabhängig von der Anzahl der Service-Management-Einrichtungen und unabhängig von der Service-Modellierung nur eine Schnittstelle erforderlich ist. Die Vorteile davon sind insbesondere in der reduzierten Belastung der Netz-Management-Einrichtungen und der Netze durch den Transfer von Management-Informationen zu sehen.

Auch die Anzahl der je Bereich (Domain) zu integrierenden Sub-Netz-Management-Einrichtungen ist erheblich kleiner als die Anzahl bei direkter Integration.

Mit der Korrelationsmatrix können durch eine einmalige Korrelation mit administrativen Kundendaten die für die einzelnen Service-Management-Einrichtungen relevanten Informationen entsprechend kanalisiert werden. Die Anbindung des Customer-Network-Management-Servers 15 ist derart vorgesehen, daß alle customer-network-management-relevanten Informationen serviceübergreifend, jedoch mit Kunden- und Service-Identifikation versehen, über die Korrelationsmatrix ermittelt werden.

## Patentansprüche

1. Einrichtung zur Steuerung eines aus mehreren Netzen bestehenden Telekommunikationssystems, wobei die Netze für Dienste oder Teile von Diensten ausgebildet sind, wobei jeweils einem Netz eine Netz-Management-Einrichtung zugeordnet ist und wobei die Netz-Management-Einrichtungen von Service-Management-Einrichtungen steuerbar sind, **dadurch gekennzeichnet, daß** für Zugriffe der Service-Management-Einrichtungen (SMS) auf Netz-Management-Einrichtungen (NMS) Domain-Manager (DM) vorgesehen sind, die ihrerseits Zugriff auf ausgewählte Netz-Management-Einrichtungen (NMS) haben und mit jeweils einer Service-Management-Einrichtung (SMS) verbunden sind.

2. Einrichtung nach Anspruch 1, **dadurch gekennzeichnet, daß** zur Verbindung der Service-Management-Einrichtungen (SMS) mit den Domain-Managern (DM) eine steuerbare Matrix (6) vorgesehen ist.

3. Einrichtung nach Anspruch 2, **dadurch gekennzeichnet, daß** die steuerbare Matrix (6) entsprechend jeweils zu verwaltender Ende-zu-Ende-Verbindungen gesteuert wird.

4. Einrichtung nach einem der Ansprüche 2 oder 3, **dadurch gekennzeichnet, daß** über die Matrix (6) ferner mindestens eine Customer-Network-Management-Einrichtung (CNMS) anschaltbar ist.

## Claims

1. Apparatus for controlling a telecommunications system consisting of multiple networks, wherein the networks are designed for services or portions of services, wherein a network management system is associated with each network, and wherein the network management systems are controllable by service management systems, **characterized in that** domain managers (DM) are provided for access to network management systems (NMS) by the service management systems (SMS), said domain managers in turn having access to selected network management systems (NMS) and being connected to one service management system (SMS) in each case.

2. Apparatus according to claim 1, **characterized in that** a controllable matrix (6) is provided for connecting the service management systems (SMS) to the domain managers (DM).

3. Apparatus according to claim 2, **characterized in that** the controllable matrix (6) is controlled in accordance with the particular end-to-end connections to be managed.

4. Apparatus according to any one of claims 2 or 3, **characterized in that** at least one customer network management system (CNMS) can also be connected through the matrix (6).

## Revendications

1. Dispositif de commande d'un système de télécommunications composé de plusieurs réseaux, les réseaux étant configurés pour des services ou des parties de services, un dispositif de gestion de réseau étant associé à chacun des réseaux et les dispositifs de gestion de réseau pouvant être commandés par des dispositifs de gestion de services, **caractérisé en ce que** des gestionnaires de domaine (DM) sont prévus pour permettre aux dispositifs de gestion de services (SMS) d'accéder aux dispositifs de gestion de réseau (NMS), lesdits gestionnaires de domaine ayant eux-mêmes accès à des dispositifs de gestion de réseau (NMS) sélectionnés et étant reliés respectivement à un dispositif de gestion de services (SMS).

2. Dispositif selon la revendication 1, **caractérisé en ce qu'**une matrice commandable (6) est prévue pour relier les dispositifs de gestion de services (SMS) aux gestionnaires de domaine (DM).

3. Dispositif selon la revendication 2, **caractérisé en ce que** la matrice (6) commandable est commandée selon des liaisons de bout en bout à gérer.

4. Dispositif selon l'une des revendications 2 ou 3, **caractérisé en ce qu'**au moins un système de gestion de réseau client (CNMS) peut en plus être connecté par l'intermédiaire de la matrice (6).
